# EUROPEAN PATENT APPLICATION

(11) **EP 4 790 909 A1**
(43) Date of publication of application: **12.08.2026**
(21) Application number: 24874873.3
(22) Date of filing: 10.09.2024
(51) Int. Cl.: H04B 1/50, H04B 1/00, H04B 1/04, H04B 7/06, H04B 7/08, H04W 52/14, H04L 5/00, H04W 88/06

(54) **ANTENNA SWITCHING CIRCUIT AND ELECTRONIC DEVICE COMPRISING SAME**

(30) Priority: 07.10.2023 KR 20230133844; 31.10.2023 KR 20230148559
(71) Applicant: Samsung Electronics Co., Ltd., Suwon-si, Gyeonggi-do 16677 (KR)
(72) Inventor: KANG, Hyunsang, Suwon-si, Gyeonggi-do 16677 (KR); NA, Hyoseok, Suwon-si, Gyeonggi-do 16677 (KR); MOON, Yohan, Suwon-si, Gyeonggi-do 16677 (KR)
(74) Representative: HGF
(86) International application number: PCT/KR2024/013679
(87) International publication number: WO 2025/075315

(57) **Abstract**

In embodiments, provided is an electronic device. The electronic device may comprise: a processor; a radio frequency (RF) transceiver; a first filter for a first frequency band; a second filter for a second frequency band; a radio frequency front end (RFFE) circuit including an antenna switching circuit; a first antenna; a second antenna; and an impedance adjustment circuit electrically connected to a sounding reference signal (SRS) output port of the antenna switching circuit. The impedance adjustment circuit may provide a characteristic impedance of a specified magnitude at the SRS output port of the antenna switching circuit. The first antenna may be used to transmit or receive signals in the first frequency band via the antenna switching circuit in which the characteristic impedance of the specified magnitude is provided to the SRS output port. The second antenna may be used to transmit SRSs in the second frequency band via the antenna switching circuit and the impedance adjustment circuit coupled to the SRS output port of the antenna switching circuit.

## Description

### [Technical Field]

The following descriptions relate to an antenna switching circuit and an electronic device including the same.

### [Background Art]

An electronic device may include a radio frequency front end (RFFE) circuit to transmit or receive signals. The RFFE circuit may include an antenna switching circuit (e.g., an antenna switching module) configured to change an antenna used to transmit signals. For example, the electronic device may perform antenna switching based on an antenna switching circuit to transmit sounding reference signals (SRSs).

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

In embodiments, an electronic device is provided. The electronic device may include a processor, a radio frequency (RF) transceiver, a first filter for a first frequency band, a second filter for a second frequency band, a radio frequency front end (RFFE) circuit including an antenna switching circuit, a first antenna, a second antenna, and an impedance tuning circuit electrically connected to a sounding reference signal (SRS) output port of the antenna switching circuit. The impedance tuning circuit may provide a characteristic impedance with a specified magnitude at the SRS output port of the antenna switching circuit. The first antenna may be used to transmit or receive signals of the first frequency band through the antenna switching circuit in which the characteristic impedance with the specified magnitude is provided to the SRS output port. The second antenna may be used to transmit SRSs of the second frequency band through the antenna switching circuit and the impedance tuning circuit connected to the SRS output port of the antenna switching circuit.

In embodiments, an electronic device is provided. The electronic device may include a processor, a radio frequency (RF) transceiver, a first filter for a first frequency band, a second filter for a second frequency band, a radio frequency front end (RFFE) circuit including an antenna switching circuit, a first antenna electrically connected to a first port of the antenna switching circuit, a second antenna electrically connected to a second port of the antenna switching circuit, and an impedance tuning circuit connected to the second port. The impedance tuning circuit may provide a characteristic impedance with a specified magnitude at the second port of the antenna switching circuit. The processor may be configured to transmit a first sounding reference signal (SRS) of the second frequency band through the RF transceiver, the RFFE circuit, and the first antenna, while the second filter for the second frequency band and the first port are electrically connected. The processor may be configured to control the antenna switching circuit to electrically connect the first filter for the first frequency band and the first port and electrically connect the second filter for the second frequency band and the second port, after the first SRS of the second frequency band is transmitted through the first antenna. The processor may be configured to transmit a second SRS of the second frequency band through the RF transceiver, the RFFE circuit, the impedance tuning circuit, and the second antenna, while the second filter for the second frequency band is electrically connected to the second port.

In embodiments, an electronic device is provided. The electronic device may include a processor, a radio frequency (RF) transceiver, a first filter for a first frequency band, a second filter for a second frequency band, a radio frequency front end (RFFE) circuit including an antenna switching circuit, a first antenna electrically connected to a first port of the antenna switching circuit, a second antenna electrically connected to a second port of the antenna switching circuit, and an impedance tuning circuit connected to the second port. The impedance tuning circuit may provide a characteristic impedance with a specified magnitude at the second port of the antenna switching circuit.

While the second filter for the second frequency band and the first port are electrically connected, a first sounding reference signal (SRS) of the second frequency band may be transmitted through the RF transceiver, the RFFE circuit, and the first antenna. After the first SRS of the second frequency band is transmitted through the first antenna, the antenna switching circuit may be controlled to electrically connect the first filter for the first frequency band and the first port and electrically connect the second filter for the second frequency band and the second port, according to control of the processor or the RF transceiver. While the second filter for the second frequency band is electrically connected to the second port, a second SRS of the second frequency band may be transmitted through the RF transceiver, the RFFE circuit, the impedance tuning circuit, and the second antenna.

### [Description of the Drawings]

FIG. 1 is a block diagram of an electronic device in a network environment.
FIGS. 2A to 2D are diagrams for describing an effect caused by switching to a sounding reference signal (SRS) port.
FIGS. 3A and 3B illustrate an example of an electronic device including antennas for SRS transmission.
FIG. 4 illustrates an example of an attenuation circuit and a radio frequency front end (RFFE) circuit.
FIG. 5 illustrates an example of an electronic device including an attenuation circuit.
FIG. 6 illustrates an example of an RFFE circuit including an attenuation circuit.
FIG. 7A illustrates an example of an SRS coupler and an RFFE circuit.
FIG. 7B illustrates an example of an SRS coupler.
FIG. 7C illustrates an example of an S-parameter of an SRS coupler.
FIG. 8 illustrates an example of an electronic device including an SRS coupler.
FIG. 9 illustrates an example of an RFFE circuit including an SRS coupler.
FIGS. 10A and 10B illustrate an example of an electronic device in which an attenuation circuit is connected to an antenna port.
FIGS. 11A and 11B illustrate an example of an electronic device in which an SRS coupler is connected to an antenna port.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a component of an electronic device (e.g., a communication module, a wireless communication module, a substrate, a print circuit board (PCB), a flexible PCB (FPCB), a module, an antenna, an antenna element, a circuit, a processor, a chip, a component, or a device), terms referring to an RF-related component (e.g., a front end module (FEM), a power amplifier module (PAM), a FEM including duplexer (FEMid), a power amplifier module including duplexer (PAMid), an Low noise amplifier PAM including duplexer (LPAMid), a radio frequency front end (RFFE), or a radio frequency integrated circuit (RFIC)), terms referring to a shape of a component (e.g., a structure, a structural body, a support portion, a contact portion, or a protrusion), terms referring to a connection portion between structures (e.g., a connection portion, a contact portion, a support portion, a contact structure, a conductive member, or an assembly), and terms referring to a circuit (e.g., a PCB, an FPCB, a signal line, a feeding line, a data line, an RF signal line, an antenna line, an RF path, an RF module, an RF circuit, a splitter, a divider, a coupler, or a combiner) used in the following description are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

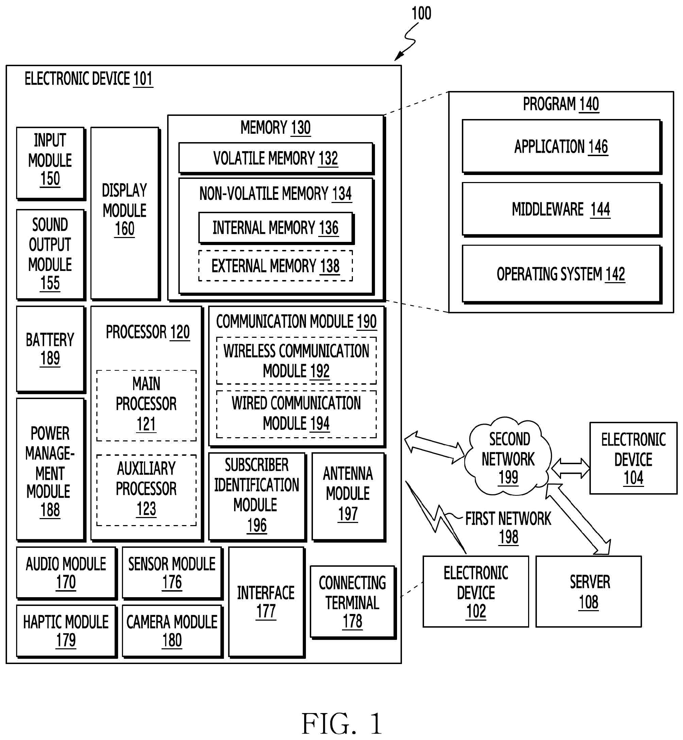

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

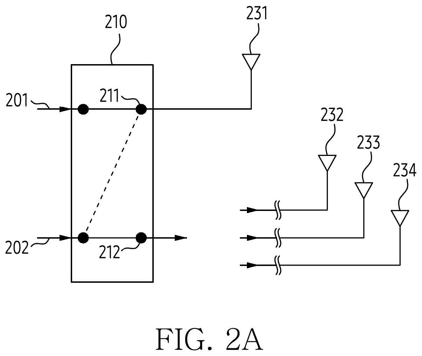

FIGS. 2A to 2D are diagrams for describing an effect caused by switching to a sounding reference signal (SRS) port. RF bands used in the electronic device 101 are increasing, and cases in which a plurality of filters are simultaneously activated are becoming frequent. The electronic device 101 may include an RFFE circuit to support a plurality of RF bands. The electronic device 101 may include an antenna switching circuit (e.g., an antenna switching module (ASM)) to transmit signals of the plurality of RF bands through a limited number of antennas. For example, the electronic device 101 may selectively electrically connect one of filters of the plurality of RF bands to an antenna through the antenna switching circuit. However, discontinuity of amplitude and/or discontinuity of phase may occur according to a switching condition of the antenna switching circuit.

Referring to FIG. 2A, the electronic device 101 may include an antenna switching circuit 210. The antenna switching circuit 210 may be connected to a filter (e.g., a duplexer) of a first frequency band (e.g., a long term evolution (LTE) frequency band) and a filter (e.g., a TDD transmission/reception filter) of a second frequency band (e.g., an NR frequency band). For example, the electronic device 101 may be configured with dual connectivity (DC) (e.g., evolved universal mobile telecommunication system (UM TS) terrestrial radio access network (EUTRA)-NR dual connectivity (EN-DC)) connected to both a network of the first frequency band and a network of the second frequency band. A first antenna 231 may transmit a first signal 201 of the first frequency band through the antenna switching circuit 210. For example, the antenna switching circuit 210 may electrically connect a filter of the first frequency band to an antenna port 211 connected to the first antenna 231. The electronic device 101 may perform SRS antenna switching. The SRS antenna switching is a technology that enables transmission of SRSs to a base station through a plurality of antennas (e.g., the first antenna 231, the second antenna 232, the third antenna 233, and the fourth antenna 234) mounted in the electronic device 101. The base station may estimate a downlink channel based on received SRSs. The base station may perform precoding or beamforming for downlink data based on the estimated downlink channel. Through this, data throughput may increase.

The electronic device 101 may electrically connect a filter of the second frequency band to an antenna port 211 or an SRS output port 212 to transmit SRS signals (e.g., a second signal 202) in the second frequency band. For example, in a case that the electronic device 101 transmits the second signal 202 through a first antenna 231, the electronic device 101 may control the antenna switching circuit 210 such that the antenna port 211 connected to the first antenna 231 is connected to a filter of the second frequency band. For example, in a case that the electronic device 101 transmits the signal 202 through the second antenna 232, the third antenna 233, or the fourth antenna 234, the electronic device 101 may control the antenna switching circuit 210 such that the SRS output port 212 is connected to a filter of the second frequency band. The SRS output port 212 may be electrically connected to the second antenna 232, the third antenna 233, or the fourth antenna 234 through at least one switching circuit (not illustrated). The SRS output port 212 may be referred to as an SRS port, an SRS output port, an SRS connection port, an SRS transmission port, an SRS path port, an SRS output terminal, an SRS transmission terminal, and/or a term having a technical/functional meaning equivalent thereto, in terms of being connected to a path through which an SRS signal is transmitted.

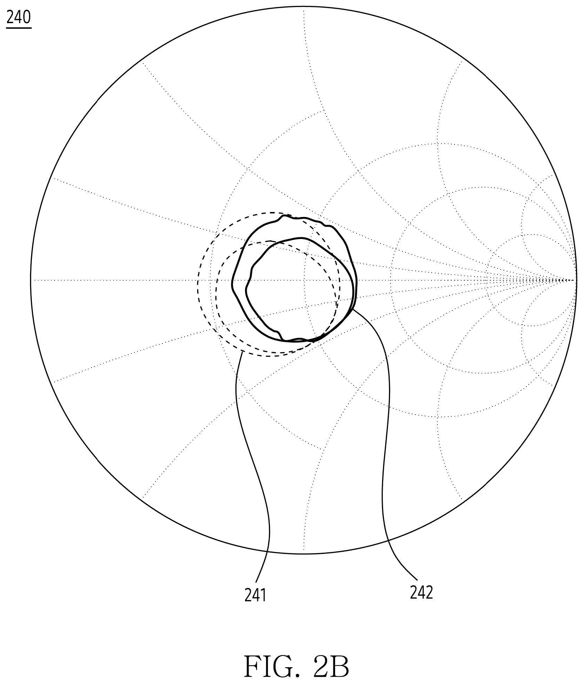

Referring to FIG. 2B, an impedance change in the first frequency band occurring when a filter of the second frequency band is switched to another antenna port 212 while the electronic device 101 is connected to both the first frequency band and the second frequency band is illustrated. Through the antenna switching circuit 210, a filter of the first frequency band may be connected to the antenna port 211, and the electronic device 101 may receive downlink data from a network node (e.g., an LTE base station) on the first frequency band. A Smith chart 240 represents an impedance change in the first frequency band occurring when a filter of the second frequency band is switched to another antenna port 212 while receiving the downlink data. For example, the first frequency band may include a middle band (DL: about 1800 megahertz (MHz) or more and less than about 2200 MHz, UL: about 1700 MHz or more and less than about 2000 MHz). As an example, the Smith chart 240 represents an impedance in Band 66. A first pattern 241 indicates an impedance in B66 when a filter of the second frequency band for SRS antenna switching is connected to the SRS output port 212, and a second pattern 242 indicates an impedance in B66 when a filter of the second frequency band for SRS antenna switching is not connected to the SRS output port 212 (for example, the filter may be connected to another antenna port different from the antenna port 211 and the SRS output port 212). Referring to the first pattern 241 and the second pattern 242, it is identified that a trajectory change of the impedance is changed.

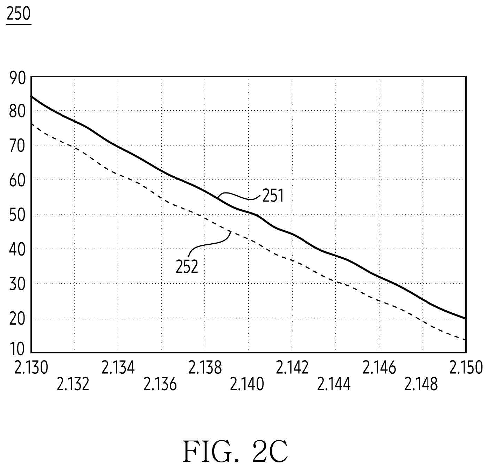

Referring to FIG. 2C, a graph 250 represents a phase according to frequency. A horizontal axis of the graph 250 represents a frequency (unit: gigahertz (GHz)), and a vertical axis of the graph 250 represents a phase (unit: degree). A first line 251 represents a phase when a filter of the second frequency band for SRS antenna switching is connected to the SRS output port 212. A second line 252 represents a phase when a filter of the second frequency band for SRS antenna switching is not connected to the SRS output port 212 (for example, the filter may be connected to another antenna port different from the antenna port 211 and the SRS output port 212). For example, at a frequency of about 2.144 GHz, the first line 251 indicates about 37 degrees, and the second line 252 indicates about 29.8 degrees. A phase difference of about 7.2 degrees may be identified before and after a connection between the filter of the second frequency band and the SRS output port 212.

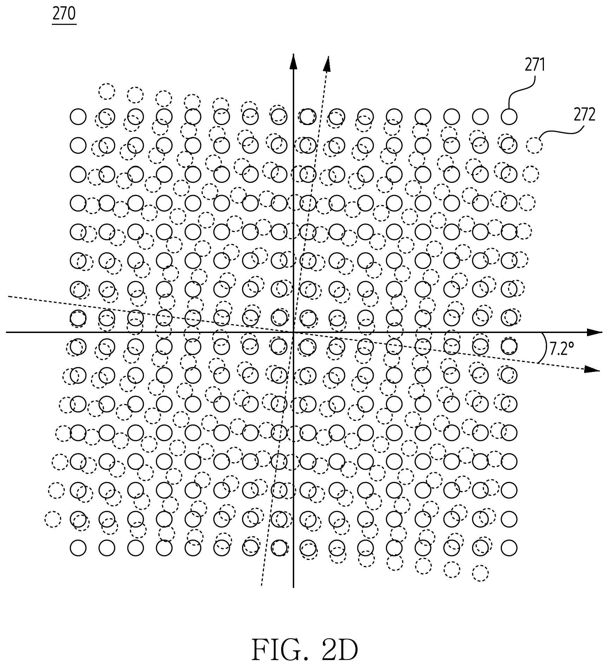

Referring to FIG. 2D, a constellation 270 represents constellation points in a high-order modulation scheme (e.g., 256 quadrature amplitude modulation (QAM), MCS level 20 or more). A first constellation point set 271 represents constellation points when a filter of the second frequency band for SRS antenna switching is not connected to the SRS output port 212. A second constellation point set 272 represents constellation points when a filter of the second frequency band for SRS antenna switching is connected to the SRS output port 212. Due to a phase difference of about 7.2 degrees, the constellation points are distorted, and due to the distorted constellation points, communication quality (e.g., block error rate (BLER)) in the first frequency band may be decreased. The decrease of the communication quality may cause a decrease in throughput degradation.

A design change of the antenna switching circuit 210 may be considered to resolve mismatch of amplitude and/or mismatch of phase, since the SRS output port 212 is selectively connected to the second antenna 232, the third antenna 233, or the fourth antenna 234 through one or more switching circuits, and a separate impedance matching circuit is configured for each path to each antenna, and thus it is difficult to stably maintain a characteristic impedance (e.g., 50 ohm) in the SRS output port 212. Accordingly, as an order of a modulation scheme is higher (e.g., '8' of 256 QAM), throughput may be difficult to sufficiently secure due to impedance mismatch according to switching. To alleviate the above-described problem, in embodiments of the present disclosure, a technique for fixedly maintaining (or maintaining within a predetermined range) a characteristic impedance by connecting an additional circuit to a port for NR SRS antenna switching (e.g., the SRS output port 212) is described.

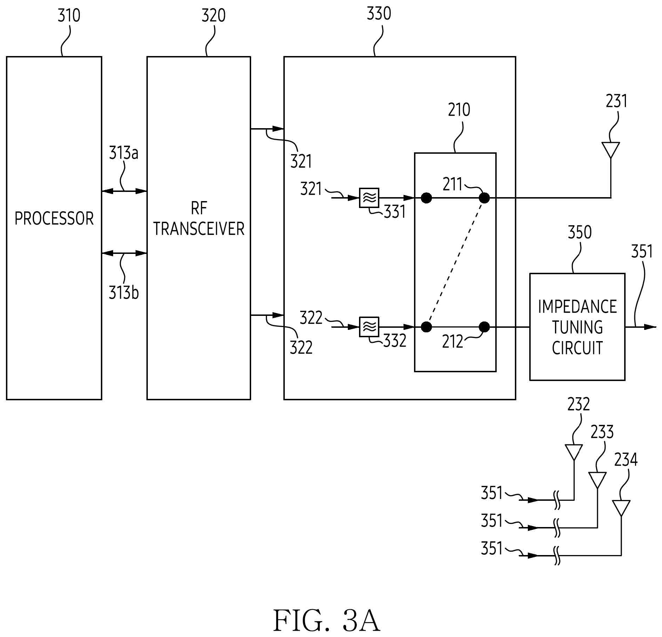

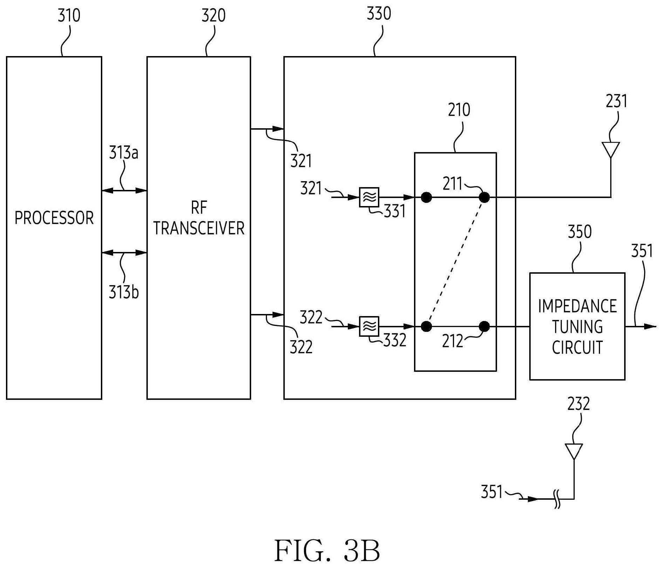

FIGS. 3A and 3B illustrate an example of an electronic device (e.g., the electronic device 101) including antennas (e.g., a first antenna 231, a second antenna 232, a third antenna 233, or a fourth antenna 234) for SRS transmission.

Referring to FIG. 3A, the electronic device 101 may include a processor 310, an RF transceiver 320 (e.g., an RFIC), an RF front end (RFFE) circuit 330, and antennas (e.g., the first antenna 231, the second antenna 232, the third antenna 233, and the fourth antenna 234). The electronic device 101 may include the processor 310. The processor 310 may include, for example, at least one of an application processor (AP) (e.g., the main processor 121 of FIG. 1)) or a communication processor (CP) (e.g., the auxiliary processor 123 of FIG. 1). For example, the processor 310 may include an AP and a CP. For example, the processor may include an AP. For example, the processor 310 may include a CP. The processor 310 may control the RF transceiver 320 through a control interface 311. For example, the processor 310 may generate a baseband signal. The processor 310 may control the RF transceiver 320 to process the generated baseband signal. The processor 310 may transmit a signal 313a (e.g., analog data or digital data). The processor 310 may control the RF transceiver 320 such that the signal is transmitted through an antenna 340. The processor 310 may receive a signal 313b (e.g., analog data or digital data).

The processor 120 or 310 of the present disclosure may include various processing circuitry and/or multiple processors. For example, a term "processor" used in the present document including claims may include various processing circuitry including at least one processor, and one or more among the at least one processor may be configured to individually and/or collectively execute various function(s) described in the present disclosure. As used in the present disclosure, in a case that "a processor", "at least one processor", and "one or more processors" are described as being configured to execute various functions, these terms may include, for example, situations in which one processor executes without limitation, situations in which some of the recited functions are executed by another processor(s) and other functions among the recited functions are executed, situations in which a single processor may execute all of the recited functions, and/or a combination of processors executing in a distributed manner. In addition, instructions (or program command) for various function(s) in the present disclosure may cause, when executed by a processor, an electronic device (e.g., the electronic device 101) to execute the various function(s).

The electronic device 101 may include an RF transceiver 320. For example, the RF transceiver 320 may be implemented as a single chip (e.g., an RFIC chip) or as a part of a single package. The RF transceiver 320 may provide an RF signal to the RFFE circuit 330. For example, the RF transceiver 320 may provide a first RF signal 321 of a first frequency band to the RFFE circuit 330. For example, the RF transceiver 320 may provide a second RF signal 322 of a second frequency band to the RFFE circuit 330. The RF transceiver 320 may include an analog to digital converter (ADC) for converting an analog signal into a digital signal. The RF transceiver 320 may include a mixer and an oscillator (e.g., a local oscillator (LO)) for down-conversion. The RF transceiver 320 may convert an RF signal received from an antenna (e.g., the first antenna 231, the second antenna 232, the third antenna 233, and the fourth antenna 234) into a baseband signal to be processed by the processor 310. The RF transceiver 320 may include one or more transmission ports. The RF transceiver 320 may receive an RF signal from the RFFE circuit 330. The RF transceiver 320 may include a digital to analog converter (DAC) for converting a digital signal into an analog signal. The RF transceiver 320 may include a mixer and an oscillator for up-conversion. The RF transceiver 320 may convert a baseband signal generated by the processor 310 into an RF signal. The RF transceiver 320 may include one or more reception ports. Although not illustrated in FIG. 3, the RF transceiver 320 may control at least a portion of a modulator or the RFFE circuit 330 through a mobile industry processor interface (MIPI).

The electronic device 101 may include a RFFE circuit 330. The RFFE circuit 330 may be configured to transmit a transmission signal from the RF transceiver 320 to an antenna. The RFFE circuit 330 may include a power amplifier (PA) for a transmission path and a filter (e.g., a duplexer 331, a TDD filter 332). The RFFE circuit 330 may include an antenna switching circuit 210. The antenna switching circuit 210 may be connected to a filter (e.g., the duplexer 331) of the first frequency band and a filter (e.g., the TDD filter 332) of the second frequency band. The antenna switching circuit 210 may electrically connect the duplexer 331, which is the filter of the first frequency band, to an antenna port 211 connected to the first antenna 231. The antenna switching circuit 210 may electrically connect the TDD filter 332, which is the filter of the second frequency band, to the antenna port 211 connected to the first antenna 231 or to an SRS output port 212 for the second antenna 232, the third antenna 233, and the fourth antenna 234. An RF signal (e.g., the first RF signal 321, the second RF signal 322) generated by the RF transceiver 320 may be radiated into air through an antenna connected according to the antenna switching circuit 210 via the transmission path. Although not illustrated in FIG. 3A, the RFFE circuit 330 may transmit a reception signal from an antenna to the RF transceiver 320. For example, the RFFE circuit 330 may include, in addition to components for the transmission path, components for a reception path. The RFFE circuit 330 may include a low noise amplifier (LNA) for the reception path.

The electronic device 101 may perform SRS antenna switching in a second frequency band (e.g., N41 band, TDD greater than or equal to 2496 MHz and less than about 2690 MHz). For example, the electronic device 101 may be configured to perform SRS antenna switching according to 1T4R. 1T4R refers to one transmit (TX) antenna and four receive (RX) antennas, and at least four SRS resources may be required for 1T4R. The electronic device 101 may be configured to perform SRS antenna switching according to 1T4R, based on configuration of a network (e.g., an NR cell). Herein, an SRS resource refers to a position of a time-frequency resource within a resource grid in which an SRS is transmitted. The electronic device 101 may transmit SRSs based on SRS resources for 1T4R. For example, after transmitting a first SRS through the first antenna 231, the electronic device 101 may connect the TDD filter 332 to the SRS output port 212 through switching of the antenna switching circuit 210. The electronic device 101 may transmit a second SRS through the second antenna 232, transmit a third SRS through the third antenna 233, and transmit a fourth SRS through the fourth antenna 234. While the TDD filter 332 is connected to the SRS output port 212, the duplexer 331 may be connected to the antenna port 211. While the TDD filter 332 is connected to the SRS output port 212 to transmit the second SRS, the third SRS, and the fourth SRS, the electronic device 101 may receive downlink data on the first frequency band.

As described through FIGS. 2A to 2D, in order to improve throughput of reception of downlink data at all times, the electronic device 101 may include an impedance tuning circuit 350 electrically connected to the SRS output port 212. The impedance tuning circuit 350 may be configured to fix (including substantially fixing to be maintained within a certain range) an input impedance viewed outward from the SRS output port 212 of the antenna switching circuit 210, in terms of transmitting or receiving a signal of the first frequency band (e.g., an LTE frequency band). If an input impedance applied to the SRS output port 212 of the antenna switching circuit 210 is fixed to a specific impedance (e.g., a characteristic impedance of about 50 ohm) regardless of factors such as switching among the second antenna 232, the third antenna 233, or the fourth antenna 234 or matching network design, a degree of mismatch of amplitude and/or mismatch of phase may be alleviated. As an example, a phase difference within a certain range (e.g., less than about 2 degrees) may ensure sufficient throughput performance even in a high-order modulation scheme. The antenna switching circuit 210 may be connected to the first antenna 231 through the antenna port 211, and may be connected to the second antenna 232, the third antenna 233, and/or the fourth antenna 234 through the SRS output port 212. The SRS output port 212 of the antenna switching circuit 210 may be connected to the impedance tuning circuit 350, and an output signal 351 of the impedance tuning circuit 350 may be transmitted to the second antenna 232, the third antenna 233, and/or the fourth antenna 234 through at least one switching circuit. For example, the output signal 351 may include a second SRS for the second antenna 232, a third SRS for the third antenna 233, or a fourth SRS for the fourth antenna 234. In a TDD frequency band (e.g., N41), the second SRS, the third SRS, and the fourth SRS may be temporally divided. According to an embodiment, the impedance tuning circuit 350 may include an attenuation circuit. The attenuation circuit may be configured to reduce power to about 3 dB or less. For example, the attenuation circuit may include a plurality of resistors, and the plurality of resistors may be configured to reduce power through a 'T'-shaped or 'ð'-shaped arrangement. The attenuation circuit may be referred to as, in addition to the attenuation circuit, attenuation circuitry, an RF attenuator, a fixed attenuator, a voltage divider, an RF attenuation circuit, a pi-type attenuator, a pi-type attenuation circuit, an impedance fixing circuit, a characteristic impedance fixing circuit, a characteristic impedance maintaining circuit, a characteristic impedance attenuation circuit, an impedance stabilization circuit, and/or a term having a technical/functional meaning equivalent thereto. In addition, according to an embodiment, the impedance tuning circuit 350 may include a coupler. As a load having a characteristic impedance (e.g., about 50 ohm)) is disposed at a through port of the coupler, an input impedance viewed from the SRS output port 212 may correspond to the characteristic impedance. The coupler may be referred to as an SRS coupler, a coupling circuit, a bidirectional coupler, a unidirectional coupler, a characteristic impedance fixing circuit, a characteristic impedance maintaining circuit, a characteristic impedance attenuation circuit, an impedance stabilization circuit, and/or a term having a technical/functional meaning equivalent thereto.

In FIG. 3A, components of the electronic device 101 including four SRS antennas for antenna switching of 1T4R or 2T4R are illustrated. However, the impedance tuning circuit 350 according to embodiments of the present disclosure is not limited thereto. For example, the electronic device 101 may be configured to perform antenna switching of 1T2R. The electronic device 101 may perform SRS antenna switching using two SRS antennas (e.g., the first antenna 231 and the second antenna 232).

Referring to FIG. 3B, the electronic device 101 may include the processor 310, the RF transceiver 320, the RFFE circuit 330, and antennas (e.g., the first antenna 231 and the second antenna 232). The electronic device 101 may include the impedance tuning circuit 350 electrically connected to the SRS output port 212. The antenna switching circuit 210 may be connected to the first antenna 231 through the antenna port 211, and may be connected to the second antenna 232 through the SRS output port 212. The SRS output port 212 of the antenna switching circuit 210 may be connected to the impedance tuning circuit 350, and an output signal 351 of the impedance tuning circuit 350 may be transmitted to the second antenna 232 through at least one switching circuit. For example, the output signal 351 may include a second SRS for the second antenna 232.

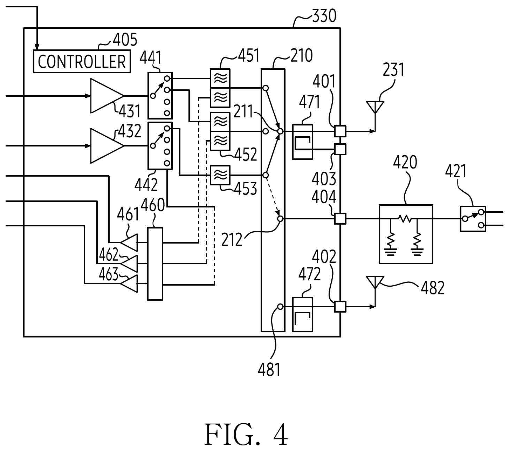

FIG. 4 illustrates an example of an attenuation circuit and a radio frequency front end (RFFE) circuit (e.g., the RFFE circuit 330). In FIG. 4, an attenuation circuit 420 is described as an example of the impedance tuning circuit 350. The same reference numerals or the same symbols may be used for the same description.

Referring to FIG. 4, the electronic device 101 may include the RFFE circuit 330. The RFFE circuit 330 may include a controller 405. The controller 405 may be configured to control components of the RFFE circuit 330 through a control interface (e.g., the mobile industry processor interface (MIPI)) with the processor 310 and/or the RF transceiver 320.

The RFFE circuit 330 may include a power amplifier (PA). For example, the RFFE circuit 330 may include a first PA 431 and a second PA 432. The first PA 431 may be used to amplify a signal of a first frequency band (e.g., a mid-band (MB) between 1 and 2.3 GHz). A signal amplified through the first PA 431 may be connected to a first duplexer 451 or a second duplexer 452 through a first transmission switch 441. For example, the first duplexer 451 may include a filter for transmitting a signal of the first frequency band. The first duplexer 451 may distinguish a transmission path and a reception path by frequency, and the first duplexer 451 may include a filter for the reception path. A signal passing through the filter may be connected to a first LNA 461 through a reception switch 460. The second duplexer 452 may distinguish a transmission path and a reception path by frequency, and the second duplexer 452 may include a filter for the reception path. A signal passing through the filter may be connected to a second LNA 462 through the reception switch 460. The second PA 432 may be used to amplify a signal of a second frequency band (e.g., a high-band (HB) of 2.3 GHz or more). A signal amplified through the second PA 432 may be connected to a TDD filter 453 through a second transmission switch 442. A signal passing through the TDD filter 453 may be connected to a third LNA 463 through the reception switch 460.

The RFFE circuit 330 may include an antenna switching circuit 210. The antenna switching circuit 210 may be configured to electrically connect a filter and a port for an antenna. The antenna switching circuit 210 may be connected to a plurality of filters. For example, the plurality of filters may include a first duplexer 451, a second duplexer 452, and a TDD filter 453. The antenna switching circuit 210 may be connected to a plurality of ports connected to antennas. The plurality of ports may include a first antenna port 211, a second antenna port 481, and an SRS output port 212. For example, the antenna switching circuit 210 may electrically connect the first duplexer 451 to the first antenna port 211. For example, the antenna switching circuit 210 may selectively electrically connect the first antenna port 211 or the SRS output port 212 to the TDD filter 453.

The RFFE circuit 330 may include a first coupler 471. The first coupler 471 may be used to feedback a portion of a transmission signal to be transmitted through the first antenna 231 connected to the RFFE circuit 330. The first coupler 471 may be connected to the first antenna port 211. For example, an input port of the first coupler 471 may be connected to the first antenna port 211, and a through port of the first coupler 471 may be connected to a first port 401 of the RFFE circuit 330. A coupling port of the first coupler 471 may be connected to a coupling port 403 of the RFFE circuit 330, or may be connected to a feedback path (not illustrated) inside the RFFE circuit 330. The RFFE circuit 330 may include a second coupler 472. The second coupler 472 may be used to feedback a portion of a transmission signal to be transmitted through the second antenna 482 connected to the RFFE circuit 330. The second coupler 472 may be connected to the second antenna port 481. For example, an input port of the second coupler 472 may be connected to the second antenna port 481, and a through port of the second coupler 472 may be connected to a second port 402 of the RFFE circuit 330. A coupling port of the second coupler 472 may be connected to a feedback path (not illustrated) inside the RFFE circuit 330.

The RFFE circuit 330 may include a plurality of ports for connection with an external component. For example, the plurality of ports may include a first port 401, a second port 402, a coupling port 403, and an SRS output port 404. The first antenna 231 may be connected to the first port 401 of the RFFE circuit 330. The second antenna 482 may be connected to the second port 402 of the RFFE circuit 330. The coupling port 403 of the RFFE circuit 330 may correspond to an output of a coupling port of the first coupler 471 for the first antenna 231. For example, an external wiring for a feedback path may be connected to the coupling port 403. The attenuation circuit 420 may be connected to the SRS output port 404 of the RFFE circuit 330 as a part of an SRS path. The attenuation circuit 420 may be configured to fix (or maintain within a certain range) an input impedance facing the SRS output port 212 in the antenna switching circuit 210 to a certain value (e.g., a characteristic impedance, about 50 ohm). The attenuation circuit 420 may be connected to a first switching circuit 421 for transmission of another SRS (e.g., a second SRS of the second antenna 232, a third SRS of the third antenna 233, a fourth SRS of the fourth antenna 234) different from a first SRS of the first antenna 231, in SRS antenna switching. Even if an impedance of a load (e.g., a load including the first switching circuit 421) after the attenuation circuit 420 changes, an input impedance at the SRS output port 212 may be fixed to a certain value (e.g., a characteristic impedance, about 50 ohm) (or may be maintained within a certain range), due to a low reflection coefficient (e.g., S11). For example, the input impedance may be determined based on the following equation. $Zin = Zs \frac{1 + {S}_{11}}{1 - {S}_{11}}$

Zᵢₙ refers to an input impedance, and Zₛ refers to a load impedance. As S₁₁ is closer to 0, the input impedance Zᵢₙ approximates Zₛ designed to be matched to an existing characteristic impedance (e.g., about 50 ohm).

As a return loss of the attenuation circuit 420 is smaller, an input impedance is less affected by frequency, and thus a stable characteristic impedance may be provided. For example, the attenuation circuit 420 may include resistors having values configured to attenuate by about 3 dB, based on a characteristic impedance of about 50 ohm.

According to an embodiment, the electronic device 101 (e.g., the processor 310) may apply an SRS offset to compensate for transmit power lowered due to the attenuation circuit 420. For example, in a case that another SRS (e.g., the second SRS of the second antenna 232, the third SRS of the third antenna 233, the fourth SRS of the fourth antenna 234) different from the first SRS is transmitted, since the another SRS is transferred to each antenna through the attenuation circuit 420, the electronic device 101 may set power of an SRS signal inputted to a power amplifier (e.g., the second PA 432) to be higher or may control the power amplifier. Through the SRS offset, transmit power of an SRS signal outputted from the SRS output port 404 of the RFFE circuit 330 may increase. Due to the increased transmit power of the SRS signal, power of an SRS signal passing through the attenuation circuit 420 and radiated through an antenna (e.g., the second antenna 232, the third antenna 233, the fourth antenna 234) may be maintained at a level equivalent to power of an SRS signal transmitted through the antenna without the attenuation circuit 420 before the SRS offset is applied.

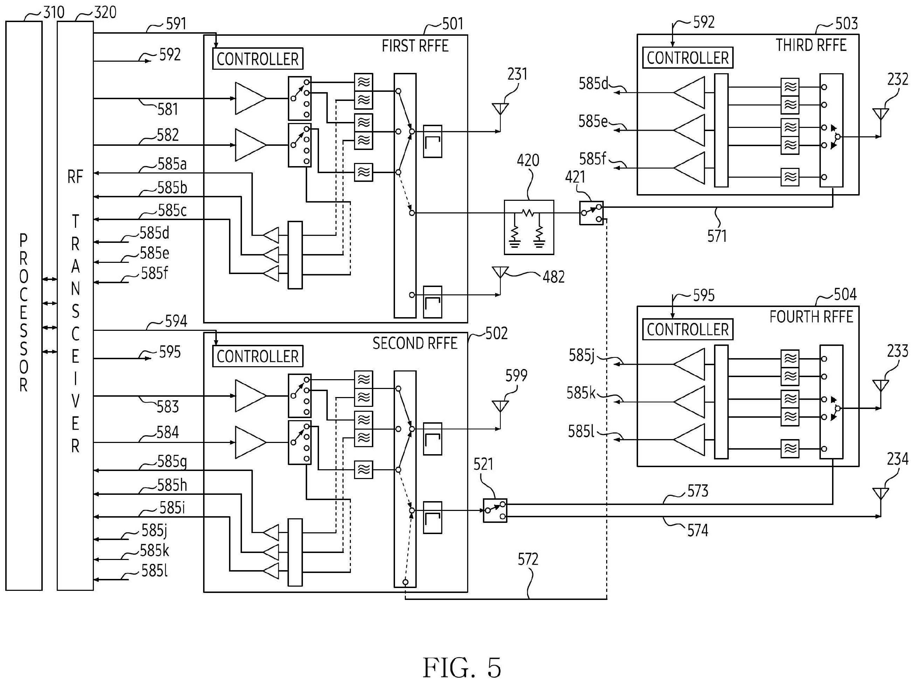

FIG. 5 illustrates an example of an electronic device (e.g., the electronic device 101) including an attenuation circuit (e.g., the attenuation circuit 420). The same reference numerals or the same symbols may be used for the same description.

Referring to FIG. 5, the electronic device 101 may include a processor 310 and an RF transceiver 320. To support various frequency combinations, the electronic device 101 may include a plurality of RFFE circuits. The plurality of RFFE circuits may include a first RFFE circuit 501, a second RFFE circuit 502, a third RFFE circuit 503, and/or a fourth RFFE circuit 504. For example, the first RFFE circuit 501 may be a transmit/receive (TRX) module (e.g., LPAMid) for transmission processing and reception processing. The first RFFE circuit 501 may include the RFFE circuit 330 described through FIGS. 3 to 4. The first RFFE circuit 501 may receive a transmission signal (e.g., a first RF transmission signal 581 and a second RF transmission signal 582) from the RF transceiver 320. For example, the first RF transmission signal 581 may be a mid-band signal, and the second RF transmission signal 582 may be a high-band signal. The first RFFE circuit 501 may transmit a reception signal (e.g., a first reception signal 585a, a second reception signal 585b, a third reception signal 585c) to the RF transceiver 320. For example, the second RFFE circuit 502 may be a TRX module (e.g., LPAMid) for transmission processing and reception processing. The second RFFE circuit 502 may receive a transmission signal (e.g., a third RF transmission signal 583 and a fourth RF transmission signal 584) from the RF transceiver 320. For example, the third RF transmission signal 583 may be a mid-band signal, and the fourth RF transmission signal 584 may be a high-band signal. The second RFFE circuit 502 may transmit a reception signal (e.g., a seventh reception signal 585g, an eighth reception signal 585h, a ninth reception signal 585i) to the RF transceiver 320. The second RFFE circuit 502 may be connected to an antenna 599. For example, the third RFFE circuit 503 may be a receive (RX) module for reception processing. The third RFFE circuit 503 may transmit a reception signal (e.g., a fourth reception signal 585d, a fifth reception signal 585e, a sixth reception signal 585f) to the RF transceiver 320. For example, the fourth RFFE circuit 504 may be an RX module for reception processing. The fourth RFFE circuit 504 may transmit a reception signal (e.g., a tenth reception signal 585j, an eleventh reception signal 585k, a twelfth reception signal 585l) to the RF transceiver 320.

The RF transceiver 320 may control each RFFE circuit through a control interface (e.g., an MIPI). For example, the RF transceiver 320 may control the first RFFE circuit 501 through a first control signal 591. The RF transceiver 320 may control the second RFFE circuit 502 through a second control signal 594. The RF transceiver 320 may control the third RFFE circuit 503 through a third control signal 592. The RF transceiver 320 may control the fourth RFFE circuit 504 through a fourth control signal 595.

The electronic device 101 may be configured to perform SRS antenna switching. For example, the electronic device 101 may receive configuration for four SRS resources for 1T4R from a network node (e.g., a base station). SRSs using the four SRS resources may include a first SRS, a second SRS, a third SRS, and a fourth SRS transmitted at different times. The SRS antenna switching technique may be used to estimate a downlink channel between antennas transmitting an SRS signal in a TDD frequency band and a network node (e.g., a base station). Accordingly, the electronic device 101 may configure four antennas for SRS for 1T4R. For example, the electronic device 101 may transmit the first SRS through the first antenna 231. The first antenna 231 may be connected to the first RFFE circuit 501. The electronic device 101 may transmit the first SRS through the second antenna 232. The second antenna 232 may be connected to the third RFFE circuit 503. The electronic device 101 may transmit the first SRS through the third antenna 233. The third antenna 233 may be connected to the fourth RFFE circuit 504. The electronic device 101 may transmit the first SRS through the fourth antenna 234. The electronic device 101 (e.g., the processor 310) may use at least one switching circuit to transmit the first SRS, the second SRS, the third SRS, and the fourth SRS in different time resources. The electronic device 101 may include a first switching circuit 421 and a second switching circuit 521 for SRS antenna switching.

For example, in a case that the first SRS is to be transmitted, the electronic device 101 (e.g., the processor 310) may control the antenna switching circuit 210 such that a filter (e.g., a TDD filter 332, a TDD filter 453) of a frequency band of the SRS antenna switching is electrically connected to an antenna port (e.g., an antenna port 211) connected to the first antenna 231.

For example, in a case that the second SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., an SRS output port 212). In addition, the electronic device 101 (e.g., the processor 310) may control the first switching circuit 421 to electrically connect the attenuation circuit 420 to a first path 571. The first switching circuit 421 may be configured to selectively electrically connect the first path 571 or a second path 572 to the attenuation circuit 420. The second SRS may be transmitted to the second antenna 232 through the first path 571 and an antenna switching circuit (e.g., an antenna switching module (ASM)) of the third RFFE circuit 503. The electronic device 101 may transmit the second SRS through the second antenna 232.

For example, in a case that the third SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., the SRS output port 212). While the filter is connected to the SRS output port, the electronic device 101 (e.g., the processor 310) may control the first switching circuit 421 to electrically connect the attenuation circuit 420 to a second path 572. While the filter is connected to the SRS output port and the attenuation circuit 420 is connected to the second path 572, the electronic device 101 may control the second switching circuit 521 and an ASM of the second RFFE circuit 502 such that the second path 572 is connected to a third path 573. The second switching circuit 521 may be configured to selectively electrically connect the third path 573 or a fourth path 574 to the ASM of the second RFFE circuit 502. The third SRS may be transmitted to the third antenna 233 through the second path 571, the third path 573, and the ASM of the third RFFE circuit 503. The electronic device 101 may transmit the third SRS through the third antenna 233.

For example, in a case that the fourth SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., the SRS output port 212). While the filter is connected to the SRS output port, the electronic device 101 (e.g., the processor 310) may control the first switching circuit 421 to electrically connect the attenuation circuit 420 to a second path 572. While the filter is connected to the SRS output port and the attenuation circuit 420 is connected to the second path 572, the electronic device 101 may control the ASM of the second RFFE circuit 502 and the second switching circuit 521 such that the second path 572 is connected to the fourth path 574. The fourth SRS may be transmitted to the fourth antenna 234 through the second path 571 and the fourth path 574. The electronic device 101 may transmit the fourth SRS through the fourth antenna 234.

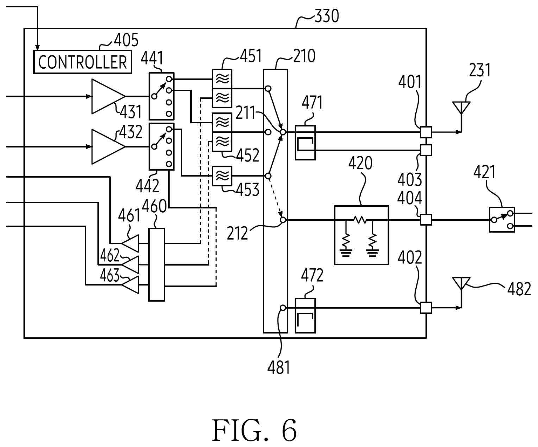

In FIGS. 4 to 5, a circuit structure in which the attenuation circuit 420 is connected outside the RFFE circuit 330 (or the first RFFE circuit 501) is illustrated. When the attenuation circuit 420 is connected to the RFFE circuit 330 as a separate component from the RFFE circuit 330, the attenuation circuit 420 may be implemented on a board (e.g., a printed board assembly (PBA)) on which the processor 310 and the RF transceiver 320 of the electronic device 101 are disposed. Meanwhile, arrangement of the attenuation circuit 420 is not limited to the above-described example. As another example, the attenuation circuit 420 may be disposed inside the RFFE circuit including the antenna switching circuit 210. An example of the attenuation circuit 420 disposed inside the RFFE circuit is described with reference to FIG. 6.

FIG. 6 illustrates an example of an RFFE circuit (e.g., the RFFE circuit 330) including an attenuation circuit (e.g., the attenuation circuit 420). The same reference numerals or the same symbols may be used for the same description.

Referring to FIG. 6, the electronic device 101 may include the RFFE circuit 330. For components of the RFFE circuit 330, descriptions of FIG. 4 may be referred to. The RFFE circuit 330 may include the attenuation circuit 420. The attenuation circuit 420 according to embodiments of the present disclosure may be configured such that an input impedance viewed from the SRS output port 212 of the antenna switching circuit 210 has a characteristic impedance with a specified magnitude (e.g., 50 ohm) (e.g., fixed to about 50 ohm or maintained within a certain limited range). Accordingly, the attenuation circuit 420 may be configured to provide the characteristic impedance with the specified magnitude by being connected to the SRS output port 212 inside the RFFE circuit 330. For example, the attenuation circuit 420 may be disposed between the SRS output port 212 of the antenna switching circuit 210 and the SRS output port 404 of the RFFE circuit 330. The SRS output port 404 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231.

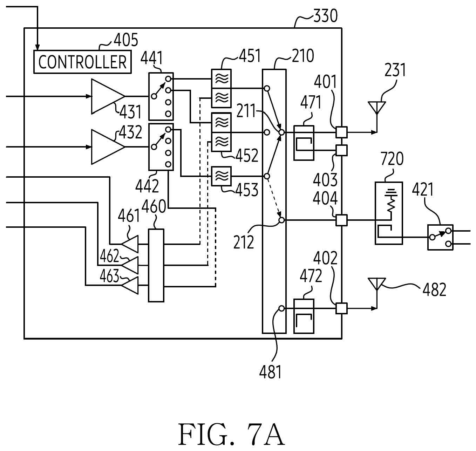

In FIGS. 4 to 6, as an example of the impedance tuning circuit 350, the attenuation circuit 420 has been exemplified. In embodiments of the present disclosure, as an example of the impedance tuning circuit 350 for providing a characteristic impedance with a specified magnitude, a coupler may be used instead of the attenuation circuit 420. The coupler may be referred to as an SRS coupler in the present disclosure to distinguish from a coupler for feedback and extraction of transmit power. Hereinafter, an exemplary circuit structure of the electronic device 101 including the SRS coupler is described with reference to FIGS. 7A, 7B, 7C, 8, and 9.

FIG. 7A illustrates an example of an SRS coupler and an RFFE circuit (e.g., the RFFE circuit 330). The same reference numerals or the same symbols may be used for the same description.

Referring to FIG. 7A, the electronic device 101 may include the RFFE circuit 330. For components of the RFFE circuit 330, the descriptions of FIG. 4 may be referred to. The RFFE circuit 330 may include the antenna switching circuit 210. The antenna switching circuit 210 may be configured to electrically connect a filter and a port for an antenna. The antenna switching circuit 210 may be connected to a plurality of filters. For example, the plurality of filters may include a first duplexer 451, a second duplexer 452, and a TDD filter 453. The antenna switching circuit 210 may be connected to a plurality of ports connected to antennas. The plurality of ports may include a first antenna port 211, a second antenna port 481, and an SRS output port 212. For example, the antenna switching circuit 210 may electrically connect the first duplexer 451 to the first antenna port 211. For example, the antenna switching circuit 210 may selectively electrically connect the first antenna port 211 or the SRS output port 212 to the TDD filter 453.

The RFFE circuit 330 may include an SRS coupler 720. The SRS coupler 720 according to embodiments of the present disclosure may be configured such that an input impedance viewed from the SRS output port 212 of the antenna switching circuit 210 has a characteristic impedance with a specified magnitude (e.g., 50 ohm) (e.g., fixed to about 50 ohm or maintained within a certain limited range). The RFFE circuit 330 may include a plurality of ports for connection with an external component. For example, the plurality of ports may include a first port 401, a second port 402, a coupling port 403, and an SRS output port 404. The SRS coupler 720 may be connected to the SRS output port 404 of the RFFE circuit 330 as a part of an SRS path. The SRS coupler 720 may be configured to fix (or maintain within a certain range) an input impedance facing the SRS output port 212 in the antenna switching circuit 210 to a certain value (e.g., a characteristic impedance, about 50 ohm). The SRS coupler 720 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231 in SRS antenna switching. Even if an impedance of a load (e.g., a load including the first switching circuit 421) after the SRS coupler 720 changes, due to a low reflection coefficient (e.g., S11), the input impedance at the SRS output port 212 may be fixed to a certain value (e.g., a characteristic impedance, about 50 ohm) (or maintained within a certain range).

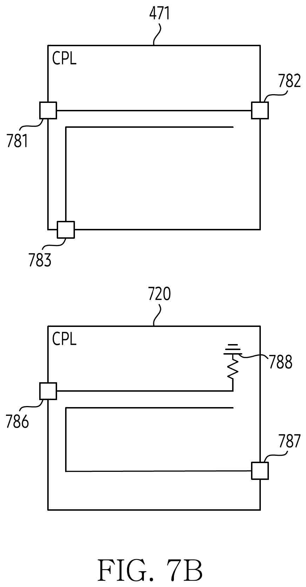

FIG. 7B illustrates an example of an SRS coupler (e.g., an SRS coupler 720).

Referring to FIG. 7B, a coupler (e.g., the first coupler 471) for extraction of transmit power and an SRS coupler 720 for providing a characteristic impedance with a specified magnitude are illustrated. The first coupler 471 may include an input port 781, a through port 782, and a coupling port 783. A transmission signal may be transmitted from the input port 781 to the through port 782, and the transmission signal may be radiated to the outside through an antenna (e.g., the first antenna 231) connected to the through port 782. The first coupler 471 may provide a portion of the transmission signal to an RF transceiver (e.g., the RF transceiver 320) through a feedback path connected to the coupling port 783.

The SRS coupler 720 may include an input port 786 and a coupling port 787. The SRS coupler 720 may include a load 788 having a specified magnitude (e.g., a characteristic impedance, about 50 ohm). As the SRS coupler 720 is electrically connected to the SRS output port 212, an input impedance viewed from the SRS output port 212 may be maintained as a value corresponding to the self load. An SRS signal outputted from the SRS output port 212 may be coupled at the SRS coupler 720, and the coupled signal (hereinafter, a coupled SRS signal) may be outputted through the coupling port 787. The coupled SRS signal may be transmitted to the second antenna 232, the third antenna 233, or the fourth antenna 234 through the first switching circuit 421.

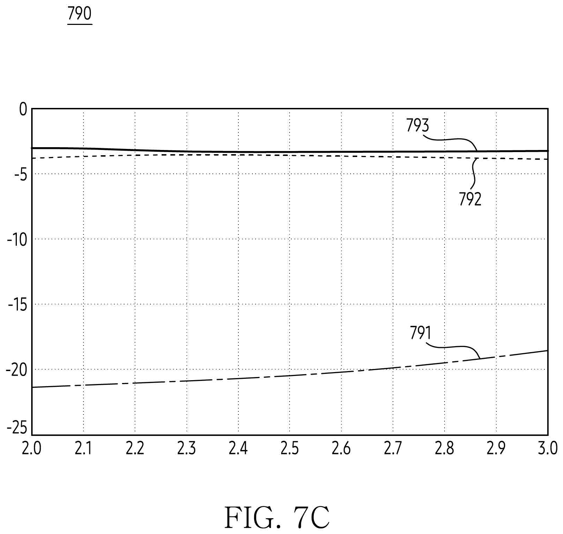

FIG. 7C illustrates an example of an S-parameter of an SRS coupler (e.g., an SRS coupler 720).

Referring to FIG. 7C, a graph 790 represents an S-parameter of the SRS coupler 720. A horizontal axis of the graph 790 represents a frequency (unit: GHz), and a vertical axis of the graph 790 represents an S-parameter (e.g., a reflection coefficient (S11), a through coefficient (S21)). For example, the SRS coupler 720 may be a 3 dB directional coupler. A first line 791 represents a reflection coefficient. For example, at a frequency of about 2.6 GHz, it may be identified that a reflection coefficient of the SRS coupler 720 is -20 dB or less. The low reflection coefficient may provide a characteristic impedance with a specified magnitude. A second line 792 represents a through coefficient of an inputted SRS signal. A third line 793 represents a through coefficient of a coupled SRS signal. At a frequency of about 2.6 GHz, the second line 792 represents about - 3.274 dB, and the third line 793 represents about -3.585 dB. It may be identified that a difference between the second line 792 and the third line 793 is about 3 dB.

According to an embodiment, the electronic device 101 (e.g., the processor 310) may apply an SRS offset to compensate for transmit power lowered due to the SRS coupler 720. For example, in a case that another SRS (e.g., the second SRS of the second antenna 232, the third SRS of the third antenna 233, the fourth SRS of the fourth antenna 234) different from the first SRS is transmitted, it may be transferred to each antenna through coupling of the SRS coupler 720. Due to the coupling, output of the SRS signal may be reduced. For example, in a case that the SRS coupler 720 is a 3 dB coupler, output of the SRS signal may be reduced by about 3 dB. To compensate for the reduced output, the electronic device 101 may set power of an SRS signal inputted to a power amplifier (e.g., the second PA 432) to be higher or may control the power amplifier. Through the SRS offset, transmit power of an SRS signal outputted from the SRS output port 404 of the RFFE circuit 330 may increase. Due to the increased transmit power of the SRS signal passing through the SRS coupler 720 and radiated through an antenna (e.g., the second antenna 232, the third antenna 233, the fourth antenna 234) may be maintained at a level equivalent to power of an SRS signal transmitted through the antenna without the SRS coupler 720 before the SRS offset is applied.

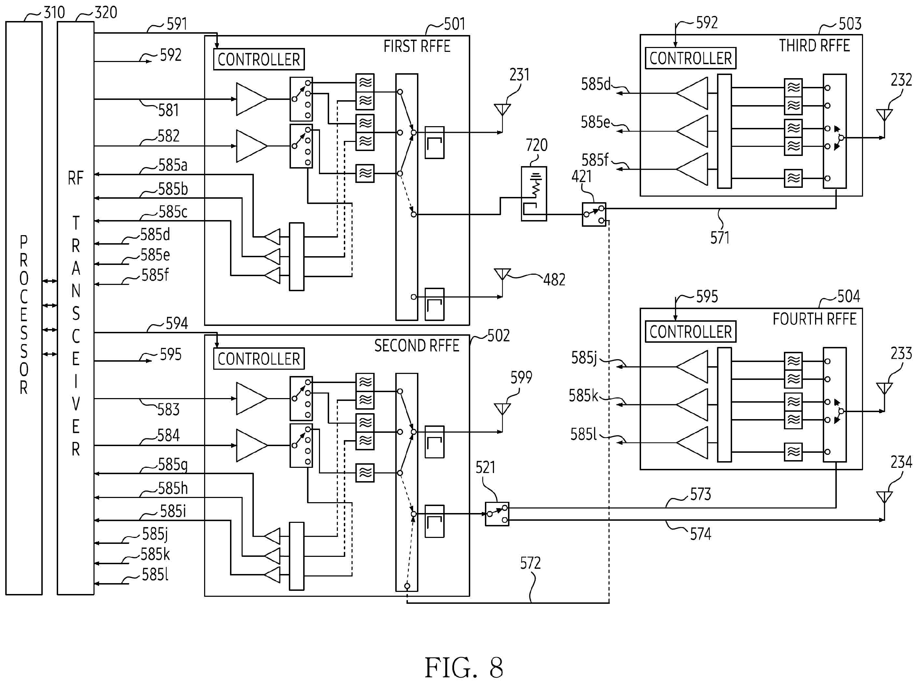

FIG. 8 illustrates an example of an electronic device (e.g., the electronic device 101) including an SRS coupler (e.g., the SRS coupler 720). The same reference numerals or the same symbols may be used for the same description.

Referring to FIG. 8, the electronic device 101 may include a processor 310 and an RF transceiver 320. To support various frequency combinations, the electronic device 101 may include a plurality of RFFE circuits. The plurality of RFFE circuits may include a first RFFE circuit 501, a second RFFE circuit 502, a third RFFE circuit 503, and/or a fourth RFFE circuit 504. The descriptions of FIGS. 4 and 5 may be referred to for description of each module. For example, the first RFFE circuit 501 may be a transmit/receive (TRX) module (e.g., LPAMid) for transmission processing and reception processing. The first RFFE circuit 501 may include the RFFE circuit 330 described with reference to FIGS. 3, 4, and 7A. The second RFFE circuit 502 may receive a transmission signal (e.g., a third RF transmission signal 583 and a fourth RF transmission signal 584) from the RF transceiver 320. For example, the third RFFE circuit 503 may be a receive (RX) module for reception processing. The fourth RFFE circuit 504 may be an RX module for reception processing.

The electronic device 101 may be configured to perform SRS antenna switching. For example, the electronic device 101 may receive configuration for four SRS resources for 1T4R from a network node (e.g., a base station). The electronic device 101 may configure four antennas for SRS for 1T4R. For example, the electronic device 101 may transmit a first SRS through the first antenna 231. The first antenna 231 may be connected to the first RFFE circuit 501. The electronic device 101 may transmit the first SRS through the second antenna 232. The second antenna 232 may be connected to the third RFFE circuit 503. The electronic device 101 may transmit the first SRS through the third antenna 233. The third antenna 233 may be connected to the fourth RFFE circuit 504. The electronic device 101 may transmit the first SRS through the fourth antenna 234. The electronic device 101 (e.g., the processor 310) may use at least one switching circuit to transmit a first SRS, a second SRS, a third SRS, and a fourth SRS in different time resources. The electronic device 101 may include a first switching circuit 421 and a second switching circuit 521 for SRS antenna switching.

For example, in a case that a first SRS is to be transmitted, the electronic device 101 (e.g., the processor 310) may control the antenna switching circuit 210 such that a filter (e.g., a TDD filter 332, a TDD filter 453) of a frequency band of the SRS antenna switching is electrically connected to an antenna port (e.g., a antenna port 211) connected to the first antenna 231.

For example, in a case that the second SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., an SRS output port 212). In addition, the electronic device 101 (e.g., the processor 310) may control the first switching circuit 421 to electrically connect a coupling port 787 of the SRS coupler 720 to a first path 571. The first switching circuit 421 may be configured to selectively electrically connect the first path 571 or a second path 572 to the coupling port 787 of the SRS coupler 720. The second SRS may be transmitted to the second antenna 232 through the first path 571 and an antenna switching circuit (e.g., an antenna switching module (ASM)) of the third RFFE circuit 503. The electronic device 101 may transmit the second SRS through the second antenna 232.

For example, in a case that the third SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., the SRS output port 212). While the filter is connected to the SRS output port, the electronic device 101 (e.g., the processor 310) may control the first switching circuit 421 to electrically connect the coupling port 787 of the SRS coupler 720 to the second path 572. While the filter is connected to the SRS output port and the coupling port 787 of the SRS coupler 720 is connected to the second path 572, the electronic device 101 may control an ASM of the second RFFE circuit 502 and the second switching circuit 521 such that the second path 572 is connected to a third path 573. The second switching circuit 521 may be configured to selectively electrically connect the third path 573 or a fourth path 574 to the ASM of the second RFFE circuit 502. The third SRS may be transmitted to the third antenna 233 through the second path 571, the third path 573, and an ASM of the RFFE circuit 503. The electronic device 101 may transmit the third SRS through the third antenna 233.

For example, in a case that the fourth SRS is to be transmitted, the electronic device 101 (e.g., the processor 310) may control the antenna switching circuit 210 such that a filter (e.g., the TDD filter 332, the TDD filter 453) of a frequency band of the SRS antenna switching is electrically connected to an SRS output port (e.g., the SRS output port 212). While the filter is connected to the SRS output port, the electronic device 101 (e.g., the processor 310) may control the first switching circuit 421 to electrically connect the coupling port 787 of the SRS coupler 720 to the second path 572. While the filter is connected to the SRS output port and the coupling port 787 of the SRS coupler 720 is connected to the second path 572, the electronic device 101 may control the ASM of the second RFFE circuit 502 and the second switching circuit 521 such that the second path 572 is connected to the fourth path 574. The fourth SRS may be transmitted to the fourth antenna 234 through the second path 571 and the fourth path 574. The electronic device 101 may transmit the fourth SRS through the fourth antenna 234.

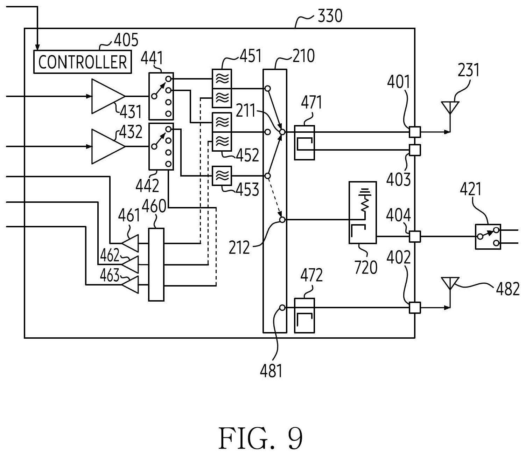

In FIGS. 7A, 7B, 7C, and 8, a circuit structure in which the SRS coupler 720 is connected outside the RFFE circuit 330 (or the first RFFE circuit 501) is illustrated. When the SRS coupler 720 is connected to the RFFE circuit 330 as a separate component from the RFFE circuit 330, the SRS coupler 720 may be disposed on a board (e.g., a PBA) on which the processor 310 and the RF transceiver 320 of the electronic device 101 are disposed. Meanwhile, arrangement of the SRS coupler 720 is not limited to the above-described example. As another example, the SRS coupler 720 may be disposed inside the RFFE circuit including the antenna switching circuit 210. An example of the SRS coupler 720 disposed inside the RFFE circuit is described with reference to FIG. 9.

FIG. 9 illustrates an example of an RFFE circuit (e.g., the RFFE circuit 330) including an SRS coupler (e.g., the SRS coupler 720). The same reference numerals or the same symbols may be used for the same description.

Referring to FIG. 9, the electronic device 101 may include the RFFE circuit 330. For components of the RFFE circuit 330, the descriptions of FIG. 4 may be referred to. The RFFE circuit 330 may include the SRS coupler 720. The SRS coupler 720 according to embodiments of the present disclosure may be configured such that an input impedance viewed from the SRS output port 212 of the antenna switching circuit 210 has a characteristic impedance with a specified magnitude (e.g., 50 ohm) (e.g., fixed to about 50 ohm or maintained within a certain limited range). For example, a load 788 of the SRS coupler 720 may be matched to have a magnitude corresponding to the characteristic impedance. The SRS coupler 720 may be configured to provide the characteristic impedance with the specified magnitude, by being connected to the SRS output port 212 inside the RFFE circuit 330. For example, the SRS coupler 720 may be disposed between the SRS output port 212 of the antenna switching circuit 210 and the SRS output port 404 of the RFFE circuit 330. An input port 786 of the SRS coupler 720 may be connected to the SRS output port 212 of the antenna switching circuit 210, and a coupling port 787 of the SRS coupler 720 may be connected to the SRS output port 404 of the RFFE circuit 330. The SRS output port 404 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231.

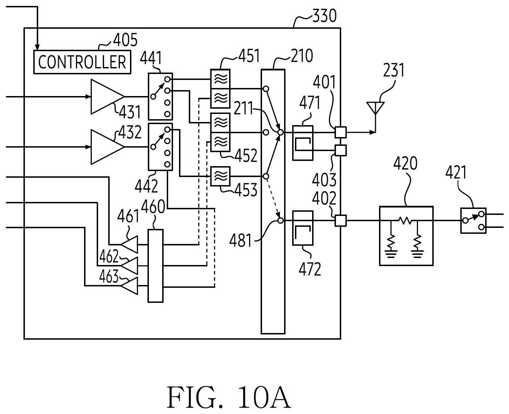

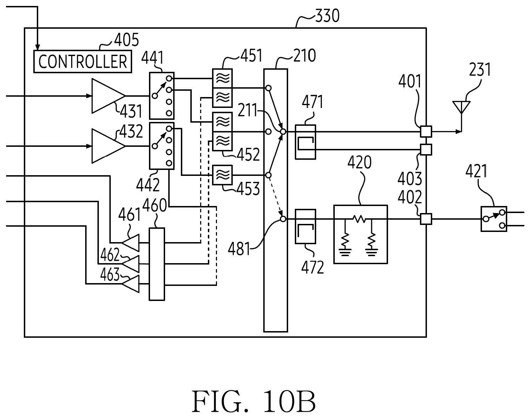

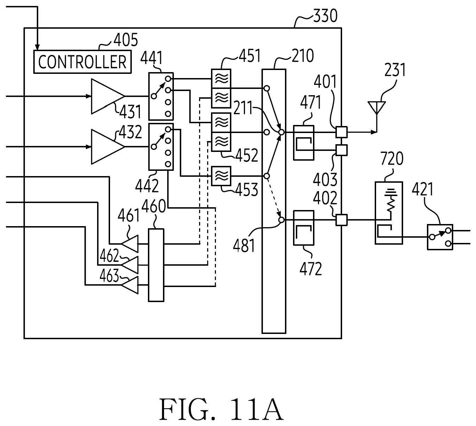

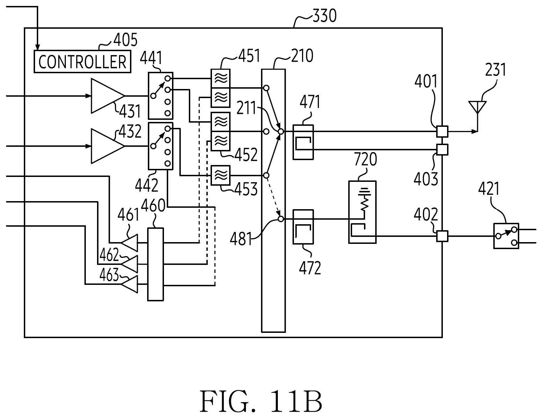

The RFFE circuit 330 described with reference to FIGS. 4 to 9 may include two antenna ports (e.g., the first port 401 and the second port 402) and the SRS output port 404. According to a design scheme of the RFFE circuit, the RFFE circuit may not include the SRS output port 404 separately. The RFFE circuit may include the first port 401 and the second port 402. The second port 402 for connection with the second antenna 482 may be used as an SRS output port. Hereinafter, in FIGS. 10A, 10B, 11A, and 11B, an example in which the second port 402 is used as the SRS output port of the present disclosure instead of an RFFE circuit provided with a separate SRS output port is described.

FIGS. 10A and 10B illustrate an example of an electronic device (e.g., the electronic device 101) in which an attenuation circuit (e.g., the attenuation circuit 420) is connected to an antenna port (e.g., the second antenna port 482). The same reference numerals or the same symbols may be used for the same description.

Referring to FIG. 10A, the electronic device 101 may include the RFFE circuit 330. For components of the RFFE circuit 330, the descriptions of FIG. 4 may be referred to. The RFFE circuit 330 may include the antenna switching circuit 210. The antenna switching circuit 210 may be configured to electrically connect a filter and a port for an antenna. The antenna switching circuit 210 may be connected to a plurality of filters.

The antenna switching circuit 210 may be connected to a plurality of ports connected to antennas. The plurality of ports may include a first antenna port 211 and a second antenna port 481. For example, the antenna switching circuit 210 may electrically connect the first duplexer 451 to the first antenna port 211. For example, the antenna switching circuit 210 may selectively electrically connect the first antenna port 211 or the second antenna port 481 to the TDD filter 453.

The RFFE circuit 330 may include a first coupler 471. The first coupler 471 may be used to feedback a portion of a transmission signal to be transmitted through the first antenna 231 connected to the RFFE circuit 330. The first coupler 471 may be connected to the first antenna port 211. For example, an input port of the first coupler 471 may be connected to the first antenna port 211, and a through port of the first coupler 471 may be connected to a first port 401 of the RFFE circuit 330. The RFFE circuit 330 may include a second coupler 472. For example, an input port of the second coupler 472 may be connected to the second antenna port 481, and a through port of the second coupler 472 may be connected to a second port 402 of the RFFE circuit 330. The RFFE circuit 330 may include the second coupler 472, but the second coupler 472 may be connected to the attenuation circuit 420 instead of being directly connected to a separate transmission antenna.

The second port 402 of the RFFE circuit 330 may be connected to the attenuation circuit 420. The attenuation circuit 420 may be configured to fix (or maintain within a certain range) an input impedance facing the second antenna port 481 in the antenna switching circuit 210 to a certain value (e.g., a characteristic impedance, about 50 ohm). The attenuation circuit 420 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231 in SRS antenna switching.

Referring to FIG. 10B, the attenuation circuit 420 may be disposed inside the RFFE circuit 330. The RFFE circuit 330 may include the attenuation circuit 420. The attenuation circuit 420 according to embodiments of the present disclosure may be configured such that an input impedance viewed from the second antenna port 481 of the antenna switching circuit 210 has a characteristic impedance with a specified magnitude (e.g., 50 ohm) (e.g., fixed to about 50 ohm or maintained within a certain limited range). Accordingly, the attenuation circuit 420 may be configured to provide the characteristic impedance with the specified magnitude by being connected to the second antenna port 481 inside the RFFE circuit 330. For example, the attenuation circuit 420 may be disposed between the second antenna port 481 of the antenna switching circuit 210 and the second port 402 of the RFFE circuit 330. The second port 402 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231.

FIGS. 11A and 11B illustrate an example of an electronic device (e.g., the electronic device 101) in which an SRS coupler (e.g., the SRS coupler 720) is connected to an antenna port (e.g., the second antenna port 481). The same reference numerals or the same symbols may be used for the same description.

Referring to FIG. 11A, the electronic device 101 may include an RFFE circuit 330. For components of the RFFE circuit 330, the descriptions of FIG. 4 may be referred to. The RFFE circuit 330 may include the antenna switching circuit 210. The antenna switching circuit 210 may be configured to electrically connect a filter and a port for an antenna. The antenna switching circuit 210 may be connected to a plurality of filters. The antenna switching circuit 210 may be connected to a plurality of ports connected to antennas. The plurality of ports may include a first antenna port 211 and a second antenna port 481. For example, the antenna switching circuit 210 may electrically connect the first duplexer 451 to the first antenna port 211. For example, the antenna switching circuit 210 may selectively electrically connect the first antenna port 211 or the second antenna port 481 to the TDD filter 453.

The RFFE circuit 330 may include a first coupler 471. The first coupler 471 may be used to feedback a portion of a transmission signal to be transmitted through the first antenna 231 connected to the RFFE circuit 330. The first coupler 471 may be connected to the first antenna port 211. For example, an input port of the first coupler 471 may be connected to the first antenna port 211, and a through port of the first coupler 471 may be connected to the first port 401 of the RFFE circuit 330. The RFFE circuit 330 may include the second coupler 472. For example, an input port of the second coupler 472 may be connected to the second antenna port 481, and a through port of the second coupler 472 may be connected to the second port 402 of the RFFE circuit 330.

The second coupler 472 may be connected to the SRS coupler 720 through the second port 402. The second port 402 of the RFFE circuit 330 may be connected to the input port 786 of the SRS coupler 720. The SRS coupler 720 may be configured to fix (or maintain within a certain range) an input impedance facing the second antenna port 481 in from the antenna switching circuit 210 to a certain value (e.g., a characteristic impedance, about 50 ohm). For example, a load 788 of the SRS coupler 720 may be configured to have about 50ohm. The coupling port 787 of the SRS coupler 720 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231 in SRS antenna switching.

Referring to FIG. 11B, the SRS coupler 720 may be disposed inside the RFFE circuit 330. The RFFE circuit 330 may include the SRS coupler 720. The SRS coupler 720 according to embodiments of the present disclosure may be configured such that an input impedance viewed from the second antenna port 481 of the antenna switching circuit 210 has a characteristic impedance with a specified magnitude (e.g., 50 ohm) (e.g., fixed to about 50 ohm or maintained within a certain limited range). Accordingly, inside the RFFE circuit 330, an input port of the SRS coupler 720 may be connected to the second antenna port 481. Due to a load 788 connected to the second antenna port 481, a magnitude of an input impedance facing the second antenna port 481 in the antenna switching circuit 210 may be maintained as a magnitude (e.g., 50 ohm) of the load 788. For example, the SRS coupler 720 may be disposed between the second antenna port 481 of the antenna switching circuit 210 and the second port 402 of the RFFE circuit 330. The second port 402 may be connected to the first switching circuit 421 for transmission of another SRS (e.g., the second SRS of the second antenna 232, the third SRS of the third antenna 233, the fourth SRS of the fourth antenna 234) different from the first SRS of the first antenna 231.

In embodiments, an electronic device 101 is provided. The electronic device 101 may include a processor 310, a radio frequency (RF) transceiver 320, a first filter for a first frequency band (e.g., the duplexer 331, the first duplexer 451), a second filter for a second frequency band (e.g., the TDD filter 332, the TDD filter 453), a radio frequency front end (RFFE) circuit 330 including an antenna switching circuit 210, a first antenna 231, a second antenna 232; 233; 234, and an impedance tuning circuit 350; 420; 720 electrically connected to a sounding reference signal (SRS) output port 212; 481 of the antenna switching circuit 210. The impedance tuning circuit 350; 420; 720 may provide a characteristic impedance with a specified magnitude at the SRS output port 212; 481 of the antenna switching circuit 210. The first antenna 231 may be used to transmit or receive signals of the first frequency band through the antenna switching circuit 210 in which the characteristic impedance with the specified magnitude is provided at the SRS output port 212; 481. The second antenna 232; 233; 234 may be used to transmit SRSs of the second frequency band through the antenna switching circuit 210 and the impedance tuning circuit 350; 420; 720 connected to the SRS output port 212; 481 of the antenna switching circuit 210.

According to an embodiment, the processor 310 may be configured to transmit a first SRS of the second frequency band through the RF transceiver 320, the RFFE circuit 330, and the first antenna 231, while the second filter (e.g., the TDD filter 332, the TDD filter 453) for the second frequency band and a first port of the antenna switching circuit 210 are electrically connected. The processor 310 may be configured to control the antenna switching circuit 210 to electrically connect the first filter (e.g., the duplexer 331, the first duplexer 451) for the first frequency band and the first port and electrically connect the second filter (e.g., the TDD filter 332, the TDD filter 453) for the second frequency band and the SRS output port 212; 481 of the antenna switching circuit 210, after the first SRS of the second frequency band is transmitted through the first antenna 231. The processor 310 may be configured to transmit a second SRS of the second frequency band through the RF transceiver 320, the RFFE circuit 330, the impedance tuning circuit 350; 420; 720, and the second antenna 232; 233; 234, while the second filter (e.g., the TDD filter 332, the TDD filter 453) for the second frequency band is electrically connected to the SRS output port 212; 481.

According to an embodiment, a first SRS of the second frequency band may be transmitted through the RF transceiver 320, the RFFE circuit 330, and the first antenna 231, while the second filter (e.g., the TDD filter 332, the TDD filter 453) for the second frequency band and a first port of the antenna switching circuit are electrically connected. After the first SRS of the second frequency band is transmitted through the first antenna 231, the antenna switching circuit 210 may be controlled to electrically connect the first filter for the first frequency band and the first port and electrically connect the second filter for the second frequency band and the SRS output port of the antenna switching circuit 210. While the second filter for the second frequency band is electrically connected to the SRS output port, a second SRS of the second frequency band may be transmitted through the RF transceiver 320, the RFFE circuit 330, the impedance tuning circuit 350; 420; 720, and the second antenna 232.

According to an embodiment, the impedance tuning circuit 350; 420; 720 may include an attenuation circuit 420 including at least one passive element. The at least one passive element may include resistors having values configured such that the characteristic impedance has the specified magnitude.

According to an embodiment, the RFFE circuit 330 may include a front-end module (e.g., Low noise amplifier PAM including duplexer (LPAMid) of FIG. 4) including the first filter (e.g., the duplexer 331, the first duplexer 451), the second filter (e.g., the TDD filter 332, the TDD filter 453), and the antenna switching circuit 210. A first port (e.g., the first port 401) of the front-end module may be electrically connected to the first antenna 231. A second port (e.g., the SRS output port 404) of the front-end module may be connected to the attenuation circuit 420. The second port of the front-end module may be electrically connected to the second antenna 232; 233; 234 through the attenuation circuit 420 and at least one switching circuit. The attenuation circuit 420 may be disposed on a printed board assembly (PBA) of the electronic device 101.

According to an embodiment, the RFFE circuit 330 may include a front-end module (e.g., Low noise amplifier PAM including duplexer (LPAMid) of FIG. 6) including the first filter (e.g., the duplexer 331, the first duplexer 451), the second filter (e.g., the TDD filter 332, the TDD filter 453), and the antenna switching circuit 210. The attenuation circuit 420 may be disposed inside the front-end module. A first port (e.g., the first port 401) of the front-end module may be electrically connected to the first antenna 231. A second port (e.g., the SRS output port 404) of the front-end module may be electrically connected to the second antenna 232; 233; 234. The attenuation circuit 420 inside the front-end module may be disposed between the antenna switching circuit 210 and the second port of the front-end module.

According to an embodiment, the impedance tuning circuit 350; 420; 720 may include an SRS coupler 720. The SRS coupler 720 may include an input port, a through port, and a coupling port. The input port may be configured to receive signals of the second frequency band. The through port may be connected to an impedance load having the specified magnitude. The coupling port may be configured to output SRSs coupled based on signals of the second frequency band.

According to an embodiment, the RFFE circuit 330 may include a front-end module (e.g., Low noise amplifier PAM including duplexer (LPAMid) of FIG. 7A) including the first filter (e.g., the duplexer 331, the first duplexer 451), the second filter (e.g., the TDD filter 332, the TDD filter 453), and the antenna switching circuit 210. A first port (e.g., the first port 401) of the front-end module may be electrically connected to the first antenna 231. A second port (e.g., the SRS output port 404) of the front-end module may be connected to the input port of the SRS coupler 720. The second port of the front-end module may be electrically connected to the second antenna 232; 233; 234 through the SRS coupler 720 and at least one switching circuit. The SRS coupler 720 may be disposed on a printed board assembly (PBA) of the electronic device 101.

According to an embodiment, the RFFE circuit 330 may include a front-end module (e.g., Low noise amplifier PAM including duplexer (LPAMid) of FIG. 9) including the first filter (e.g., the duplexer 331, the first duplexer 451), the second filter (e.g., the TDD filter 332, the TDD filter 453), and the antenna switching circuit 210. The SRS coupler 720 may be disposed inside the front-end module. A first port (e.g., the first port 401) of the front-end module may be electrically connected to the first antenna 231. A second port (e.g., the SRS output port 404) of the front-end module may be electrically connected to the second antenna 232; 233; 234. Inside the front-end module, the input port of the SRS coupler 720 may be connected to the antenna switching circuit 210. Inside the front-end module, the coupling port of the SRS coupler 720 may be connected to the second port of the front-end module.

According to an embodiment, the electronic device 101 may include a coupler disposed between the antenna switching circuit 210 and the first antenna 231. The coupler may include an input port, a through port, and a coupling port. The input port may be configured to receive the first SRS of the second frequency band. The through port may be configured to output the first SRS. The coupling port may be configured to output a signal coupled based on the first SRS.

According to an embodiment, the processor 310 may be configured to receive signals of the first frequency band through the first antenna 231, while the second filter for the second frequency band (e.g., the TDD filter 332, the TDD filter 453) is electrically connected to the SRS output port 212; 481 through the antenna switching circuit 210.

According to an embodiment, signals of the first frequency band may be received through the first antenna 231, while the second filter for the second frequency band (e.g., the TDD filter 332, the TDD filter 453) is electrically connected to the SRS output port 212; 481 through the antenna switching circuit 210.

According to an embodiment, the first frequency band may be a band for long-term evolution (LTE) signals. The second frequency band may be a time division duplex (TDD) band for new radio (NR) signals. The electronic device 101 may be configured with evolved universal mobile telecommunication system (UM TS) terrestrial radio access network (EUTRA)-NR dual connectivity (EN-DC) using the first frequency band and the second frequency band.

According to an embodiment, the electronic device 101 may include a third antenna 233 and a fourth antenna 234. The processor 310 may be configured to perform SRS antenna switching for the second frequency band. The first antenna 231, the second antenna 232; 233; 234, the third antenna 233, and the fourth antenna 234 may be used for one transmit four receive (1T4R) or two transmit four receive (2T4R) of the SRS antenna switching.

According to an embodiment, the electronic device 101 may include a third antenna 233 and a fourth antenna 234. The first antenna 231, the second antenna 232; 233; 234, the third antenna 233, and the fourth antenna 234 may be used for one transmit four receive (1T4R) or two transmit four receive (2T4R) of SRS antenna switching for the second frequency band.

According to an embodiment, the electronic device 101 may include a second RFFE circuit, a third RFFE circuit for the second antenna 232; 233; 234, a fourth RFFE circuit for the third antenna 233, a first switching circuit 421, and a second switching circuit 521. The impedance tuning circuit 350; 420; 720 may be disposed between the antenna switching circuit 210 and the first switching circuit 421. The first switching circuit 421 may be configured to selectively connect the impedance tuning circuit 350; 420; 720 to one of the second RFFE circuit or the third RFFE circuit. The second switching circuit 521 may be configured to selectively connect an output of the second RFFE circuit to one of the fourth RFFE circuit or the fourth antenna 234.

According to an embodiment, the processor 310 may be configured to transmit a first SRS for the SRS antenna switching through the first antenna 231. In addition, the processor 310 may be configured to control the first switching circuit 421 to connect the impedance tuning circuit 350; 420; 720 and the third RFFE circuit to transmit a second SRS through the second antenna 232; 233; 234. In addition, the processor 310 may be configured to control the first switching circuit 421 to connect the impedance tuning circuit 350; 420; 720 and the second RFFE circuit to transmit a third SRS through the third antenna 233. The processor 310 may be configured to control the second switching circuit 521 to connect an output of the second RFFE circuit and the fourth RFFE circuit to transmit the third SRS through the third antenna 233. In addition, the processor 310 may be configured to control the first switching circuit 421 to connect the impedance tuning circuit 350; 420; 720 and the second RFFE circuit to transmit a fourth SRS through the fourth antenna 234. The processor 310 may be configured to control the second switching circuit 521 to connect an output of the second RFFE circuit and the fourth antenna 234 to transmit the fourth SRS through the fourth antenna 234.

According to an embodiment, the first SRS for the SRS antenna switching may be transmitted through the first antenna 231. In addition, the first switching circuit 421 may be controlled to connect the impedance tuning circuit 350; 420; 720 and the third RFFE circuit to transmit the second SRS through the second antenna 232; 233; 234,. In addition, the first switching circuit 421 may be controlled to connect the impedance tuning circuit 350; 420; 720 and the second RFFE circuit to transmit the third SRS through the third antenna 233, and the second switching circuit 521 may be controlled to connect an output of the second RFFE circuit and the fourth RFFE circuit to transmit the third SRS through the third antenna 233. In addition, the first switching circuit 421 may be controlled to connect the impedance tuning circuit 350; 420; 720 and the second RFFE circuit to transmit the fourth SRS through the fourth antenna 234. The second switching circuit 521 may be controlled to connect an output of the second RFFE circuit and the fourth antenna 234 to transmit the fourth SRS through the fourth antenna 234.

According to an embodiment, the processor 310 may be configured to determine transmit power based on an SRS offset. The processor 310 may be configured to transmit the SRS of the second frequency band through the impedance tuning circuit 350; 420; 720 and the second antenna 232; 233; 234, based on the transmit power.

According to an embodiment, the SRS of the second frequency band may be transmitted through the impedance tuning circuit 350; 420; 720 and the second antenna 232; 233; 234. The transmit power of the SRS may be determined based on an SRS offset.

In embodiments, an electronic device 101 is provided. The electronic device 101 may include a processor 310, a radio frequency (RF) transceiver 320, a first filter (e.g., the duplexer 331, the first duplexer 451)for a first frequency band, a second filter (e.g., the TDD filter 332, the TDD filter 453) for a second frequency band, a radio frequency front end (RFFE) circuit including an antenna switching circuit 210, a first antenna 231 electrically connected to a first port of the antenna switching circuit 210, a second antenna 232; 233; 234 electrically connected to a second port of the antenna switching circuit 210, and an impedance tuning circuit 350; 420; 720 connected to the second port. The impedance tuning circuit 350; 420; 720 may provide a characteristic impedance with a specified magnitude at the second port of the antenna switching circuit 210. The processor 310 may be configured to transmit a first sounding reference signal (SRS) of the second frequency band through the RF transceiver 320, the RFFE circuit 330, and the first antenna 231, while the second filter (e.g., the TDD filter 332, the TDD filter 453) for the second frequency band and the first port are electrically connected. The processor 310 may be configured to control the antenna switching circuit 210 to electrically connect the first filter (e.g., the duplexer 331, the first duplexer 451) for the first frequency band and the first port and electrically connect the second filter (e.g., the TDD filter 332, the TDD filter 453) for the second frequency band and the second port, after the first SRS of the second frequency band is transmitted through the first antenna 231. The processor 310 may be configured to transmit a second SRS of the second frequency band through the RF transceiver 320, the RFFE circuit 330, the impedance tuning circuit 350; 420; 720, and the second antenna 232; 233; 234, while the second filter (e.g., the TDD filter 332, the TDD filter 453) for the second frequency band is electrically connected to the second port.

According to an embodiment, the processor 310 may be configured to receive signals of the first frequency band through the first antenna 231, while the second filter (e.g., the TDD filter 332, the TDD filter 453) for the second frequency band is electrically connected to the second port through the antenna switching circuit 210. The first frequency band may be a band for long-term evolution (LTE) signals. The second frequency band may be a time division duplex (TDD) band for new radio (NR) signals. The electronic device 101 may be configured with evolved universal mobile telecommunication system (UM TS) terrestrial radio access network (EUTRA)-NR dual connectivity (EN-DC) using the first frequency band and the second frequency band.

According to an embodiment, the impedance tuning circuit 350; 420; 720 may include the attenuation circuit 420 including at least one passive element. The at least one passive element may include resistors having values configured such that the characteristic impedance has the specified magnitude.

According to an embodiment, the impedance tuning circuit 350; 420; 720 may include an SRS coupler 720. The SRS coupler 720 may include an input port, a through port, and a coupling port. The input port may be configured to receive signals of the second frequency band. The through port may be connected to an impedance load having the specified magnitude. The coupling port may be configured to output SRSs coupled based on signals of the second frequency band.

According to an embodiment, the electronic device 101 may include a third antenna 233 and a fourth antenna 234. The processor 310 may be configured to perform SRS antenna switching for the second frequency band. The first antenna 231, the second antenna 232; 233; 234, the third antenna 233, and the fourth antenna 234 may be used for one transmit four receive (1T4R) or two transmit four receive (2T4R) of the SRS antenna switching.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a processor;
a radio frequency (RF) transceiver;
a radio frequency front end (RFFE) circuit including a first filter for a first frequency band, a second filer for a second frequency band, and an antenna switching circuit;
a first antenna;
a second antenna;
an impedance tuning circuit electrically connected to a sounding reference signal (SRS) output port of the antenna switching circuit,
wherein the impedance tuning circuit provides a characteristic impedance with a specified magnitude at the SRS output port of the antenna switching circuit,
wherein the first antenna is used to transmit or receive signals in the first frequency band through the antenna switching circuit in which the characteristic impedance with the specified magnitude is provided to the SRS output port, and
wherein the second antenna is used to transmit SRSs of the second frequency band through the antenna switching circuit and the impedance tuning circuit connected to the SRS output port of the antenna switching circuit.

2. The electronic device of claim 1, wherein the processor is configured to:
while the second filter for the second frequency band and the first port of the antenna switching circuit are electrically connected, transmit a first SRS of the second frequency band through the RF transceiver, the RFFE circuit, and the first antenna;
control the antenna switching circuit to electrically connect the first filter for the first frequency band to the first port and electrically connect the second filter for the second frequency ban to the SRS output port of the antenna switching circuit after the first SRS of the second frequency band is transmitted through the first antenna, and
while the second filter for the second frequency band is electrically connected to the SRS output port, transmit a second SRS of the second frequency band through the RF transceiver, the RFFE circuit, the impedance tunning circuit, and the second antenna.

3. The electronic device of claim 1,
wherein the impedance tuning circuit comprises an attenuation circuit including at least one passive element, and
wherein the at least one passive element includes resistors having values configured such that the characteristic impedance has the specified magnitude.

4. The electronic device of claim 3,
wherein the RFFE circuit comprises a front-end module including the first filter, the second filter, and the antenna switching circuit,
wherein a first port of the front-end module is electrically connected to the first antenna,
wherein a second port of the front-end module is connected to the attenuation circuit and electrically connected to the second antenna through the attenuation circuit and at least one switching circuit, and
wherein the attenuation circuit is disposed on a printed board assembly (PBA) of the electronic device.

5. The electronic device of claim 3,
wherein the RFFE circuit comprises a front-end module including the first filter, the second filter, and the antenna switching circuit,
wherein the attenuation circuit is disposed inside the front-end module,
wherein a first port of the front-end module is electrically connected to the first antenna,
wherein a second port of the front-end module is electrically connected to the second antenna, and
wherein the attenuation circuit inside the front-end module is disposed between the antenna switching circuit and the second port of the front-end module.

6. The electronic device of claim 1,
wherein the impedance tuning circuit comprises an SRS coupler,
wherein the SRS coupler comprises an input port, a through port, and a coupling port,
wherein the input port is configured to receive signals of the second frequency band,
wherein through port is connected to an impedance load having the specified magnitude, and
wherein the coupling port is configured to output SRSs that are coupled based on signals of the second frequency band.

7. The electronic device of claim 6,
wherein the RFFE circuit comprises a front-end module including the first filter, the second filter, and the antenna switching circuit,
wherein a first port of the front-end module is electrically connected to the first antenna,
wherein a second port of the front-end module is connected to the input port of the SRS coupler and is electrically connected to the second antenna through the SRS coupler and at least one switching circuit, and
wherein the SRS coupler is disposed on a printed board assembly (PBA) of the electronic device.

8. The electronic device of claim 6,
wherein the RFFE circuit comprises a front-end module including the first filter, the second filter, and the antenna switching circuit,
wherein the SRS coupler is disposed inside the front-end module,
wherein a first port of the front-end module is electrically connected to the first antenna,
wherein a second port of the front-end module is electrically connected to the second antenna,
wherein, inside the front-end module, the input port of the SRS coupler is connected to the antenna switching circuit, and
wherein, inside the front-end module, the coupling port of the SRS coupler is connected to the second port of the front-end module.

9. The electronic device of claim 6, further comprising:
a coupler disposed between the antenna switching circuit and the first antenna,
wherein the coupler includes an input port, a through port, and a coupling port,
wherein the input port is configured to receive the first SRS of the second frequency band,
wherein the through port is configured to output the first SRS, and
wherein the coupling port is configured to output a signal coupled based on the first SRS.

10. The electronic device of claim 1, wherein the processor is configured to receive signals of the first frequency band through the first antenna while the second filter for the second frequency band is electrically connected to the SRS output port through the antenna switching circuit.

11. The electronic device of claim 10,
wherein the first frequency band is a band for long-term evolution (LTE) signals,
wherein the second frequency band is a time division duplex (TDD) band for new radio (NR) signals, and
wherein the electronic device is configured with evolved universal mobile telecommunication system (UM TS) terrestrial radio access network (EUTRA)-NR dual connectivity (EN-DC) using the first frequency band and the second frequency band.

12. The electronic device of claim 1, further comprising:
a third antenna; and
a fourth antenna;
wherein the first antenna, the second antenna, the third antenna, and the fourth antenna are used for one transmit four receive (1T4R) or two transmit four receive (2T4R) of an SRS antenna switching for the second frequency band.

13. The electronic device of claim 12, further comprising
a second RFFE circuit,
a third RFFE circuit for the second antenna,
a fourth RFFE circuit for the third antenna,
a first switching circuit; and
a second switching circuit,
wherein the impedance tuning circuit is disposed between the antenna switching circuit and the first switching circuit,
wherein the first switching circuit is configured to selectively connect the impedance tuning circuit with either the second RFFE circuit or the third RFFE circuit, and
wherein the second switching circuit is configured to selectively connect the output of the second RFFE circuit with one of the fourth RFFE or the fourth antenna.

14. The electronic device of claim 13,
wherein the processor is configured to:
transmit a first SRS for switching the SRS antenna through the first antenna,
control the first switching circuit to connect the impedance tuning circuit and the third RFFE circuit, to transmit a second SRS through the second antenna,
control the first switching circuit to connect the impedance tuning circuit and the second RFFE circuit and the second switching circuit to connect an output of the second RFFE circuit and the fourth RFFE circuit, to transmit a third SRS through the third antenna, and
control the second switching circuit to connect the output of the second RFFE circuit and the fourth antenna, to transmit a fourth SRS through the fourth antenna.

15. The electronic device of claim 1,
wherein the processor is configured to:
determine a transmit power based on an SRS offset, and
transmit the SRS of the second frequency band through the impedance tuning circuit and the second antenna, based on the transmit power.
